# FASCICULE DE BREVET EUROPEEN

(11) **EP 1 962 063 B1**
(45) Date de publication et mention de la délivrance du brevet: **17.11.2010**
(21) Numéro de dépôt: 07102811.2
(22) Date de dépôt: 21.02.2007
(51) Int. Cl.: G01D 5/24, G01D 18/00

(54) **Procédé de test automatique d'un circuit électronique à capteur capacitif, et circuit électronique pour sa mise en oeuvre**
Automatischer Test einer elektronischen Schaltungsanordnung eines kapazitiven Sensors, und elektronische Schaltungsanordnung zur Ausführung des Testes
Automatic test of an electronic circuit for a capacitive sensor, and electronic circuit for carrying out said test

(43) Date de publication de la demande: 27.08.2008
(73) Titulaire: EM Microelectronic-Marin SA, 2074 Marin (CH)
(72) Inventeur: Grosjean, Sylvain, 25500 Les Fins (FR); Willemin, Michel M., 2515, Prêles (CH)
(74) Mandataire: Ravenel, Thierry Gérard Louis

(56) Documents cités:
- EP-A- 0 606 115
- WO-A-2006/008207
- DE-A1- 4 133 426
- FR-A- 2 720 510

## Description

L'invention concerne un procédé de test automatique d'un circuit électronique à capteur capacitif. Le circuit électronique comprend un capteur à condensateurs montés en différentiel relié à un circuit d'interface du capteur capacitif pour la mesure d'un paramètre physique, tel qu'une accélération, une vitesse angulaire, une force ou une pression. Une électrode commune du capteur est susceptible de se déplacer entre deux électrodes fixes sous l'action par exemple d'une force afin de modifier la valeur capacitive de chaque condensateur. Pour le procédé de test automatique, l'électrode mobile peut être déplacée entre les deux électrodes fixes par une tension de polarisation appliquée sur le capteur. Ceci permet de générer de manière volontaire une force électrostatique à mesurer, émulant ainsi une variation de la grandeur physique à mesurer.

L'invention concerne également un circuit électronique pour la mise en oeuvre du procédé de test automatique.

Dans de tels capteurs capacitifs, l'électrode commune mobile fait partie par exemple d'une armature maintenue élastiquement entre les deux électrodes fixes. Cette électrode commune est susceptible de se déplacer d'une certaine distance en direction de l'une ou l'autre des électrodes fixes sous l'action d'une force ou d'une pression par exemple. Au repos, cette électrode commune se trouve normalement à égale distance de l'une et de l'autre électrode fixe. Ceci définit des valeurs capacitives égales des deux condensateurs. Lorsque l'électrode commune se déplace sous l'action d'une force ou d'une pression ou d'une autre grandeur physique à mesurer, la valeur capacitive de chaque condensateur varie inversement. Le circuit d'interface relié au capteur capacitif est donc destiné à fournir un signal de sortie sous la forme d'une tension dépendant de la variation des capacités des deux condensateurs.

La tension de sortie peut varier dans un cas idéal linéairement par rapport au déplacement de l'électrode commune mobile, ce qui n'est en principe pas entièrement le cas si le circuit d'interface est intégré dans un substrat semi-conducteur. Il doit être tenu compte normalement des condensateurs parasites, qui s'ajoutent aux condensateurs du capteur. Ces condensateurs parasites ne dépendent pratiquement pas du déplacement de l'électrode commune, ce qui peut créer certaines non-linéarités. II en est de même pour un capteur du type MEMS intégré dans un substrat semi-conducteur, qui est relié au circuit d'interface pour former le circuit électronique. De ce fait, la tension de sortie du circuit électronique peut ne pas varier linéairement selon le déplacement de l'électrode commune mobile en fonction d'une force électrostatique à mesurer.

Pour effectuer généralement une mesure d'une force, d'une accélération ou d'une pression, les électrodes fixes des deux condensateurs sont polarisées ou excitées cycliquement par des tensions de polarité opposée par rapport à une tension intermédiaire ou médiane au repos. Ces deux tensions de polarisation sont par exemple celle fournie directement aux bornes d'une source de tension continue, telle qu'une batterie, à savoir une tension basse, qui peut être la masse, et une tension haute. En polarisant les deux électrodes fixes à des niveaux de tension différents, la différence de charges sur l'électrode mobile peut être mesurée et convertie en une tension en sortie du circuit électronique. Plusieurs cycles ou périodes de mesure successifs sont nécessaires et sont divisés chacun au moins en une phase de polarisation des électrodes fixes et une phase de décharge des électrodes fixes par la tension de sortie. Lorsque la tension de sortie est stabilisée à sa valeur finale, le transfert de charges totales de l'électrode mobile devient nul. Cette tension de sortie peut être fournie échantillonnée à un circuit de traitement susceptible de fournir des données d'accélération, de force, de pression ou également de vitesse angulaire selon la structure du capteur.

De manière à contrôler le bon fonctionnement d'un tel circuit électronique à capteur capacitif, il est nécessaire soit au début de sa mise en fonction, soit pendant des cycles de mesure d'une force, d'une accélération ou d'une pression, d'opérer un test de fonctionnalité. Pour ce faire, il est généré volontairement et cycliquement une force électrostatique en remplaçant, au moins une fois sur deux, une phase de polarisation par une phase de test. Dans cette phase de test, une seule électrode fixe d'un des condensateurs est polarisée par exemple à la tension haute de la source de tension continue sans polariser l'autre électrode fixe. De par ce déséquilibre, il est ainsi produit une force mécanique sur l'électrode mobile qui aura tendance à se diriger vers l'électrode fixe polarisée. Au terme de ce test automatique, la valeur de la tension de sortie stabilisée permet d'estimer la force électrostatique volontairement générée pour le contrôle du fonctionnement du circuit électronique. Si ce test a été effectué pendant une mesure d'une force réelle, la valeur de cette tension de sortie cumulera ou soustraira la dépendance de la force réelle et de la force électrostatique générée.

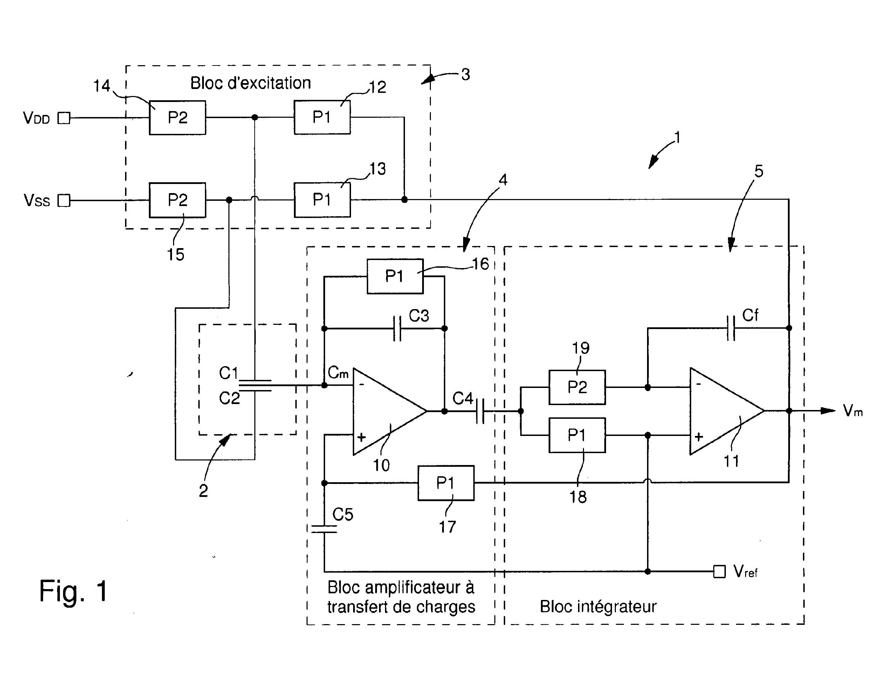

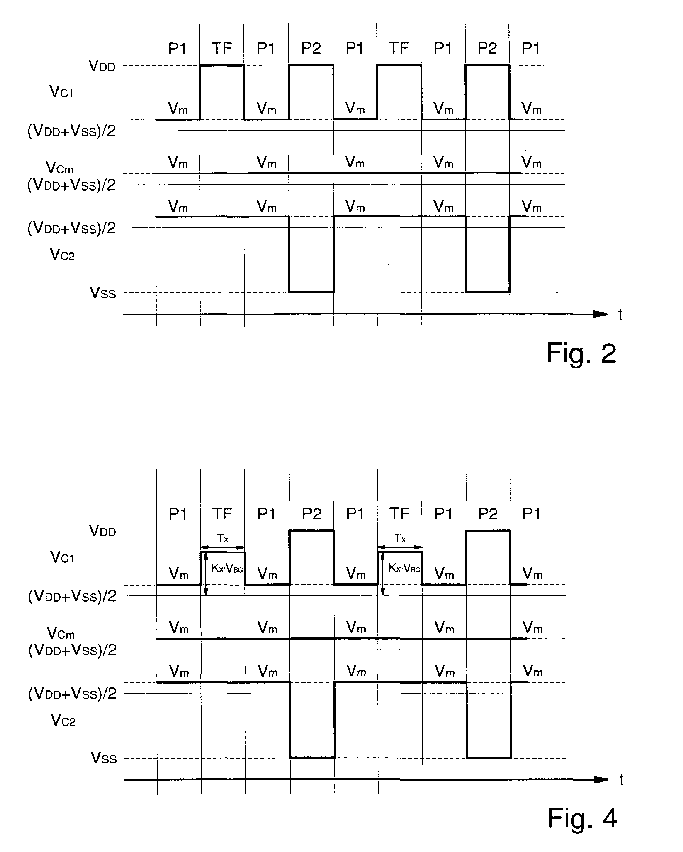

Une forme de réalisation d'un circuit électronique à capteur capacitif pour la mise en oeuvre du procédé de test automatique est représentée à la figure 1, ainsi que les différentes phases de cycles de mesure illustrées par un diagramme temporel de signaux de tension au niveau du capteur à la figure 2. Le circuit électronique représenté se base sur un circuit électronique décrit dans l'article rédigé par MM. H. Leutold et F. Rudolph, qui est paru dans la revue intitulée "Sensors and actuators" A21-A23 (1990), pages 278 à 281, et également par le brevet FR 2 720 510.

Le circuit électronique 1 représenté comprend un capteur capacitif 2 et un circuit d'interface relié au capteur pour fournir une tension de sortie de mesure Vm. Le capteur capacitif 2 comprend deux condensateurs montés en différentiel ayant une électrode commune Cm susceptible de se déplacer entre deux électrodes fixes pour définir deux condensateurs C1 et C2. L'interface électronique du capteur 2 du circuit électronique 1 comprend un bloc amplificateur à transfert de charges 4, qui est relié en entrée à l'électrode commune Cm, un bloc intégrateur 5 pour fournir en permanence en sortie une tension Vm égale à l'intégrale des charges fournies par le bloc amplificateur 4, et un bloc d'excitation 3 pour cycliquement polariser les électrodes fixes à des niveaux de tension déterminés.

Le bloc amplificateur à transfert de charges 4 comprend un amplificateur opérationnel 10, trois condensateurs C3, C4 et C5 et deux interrupteurs 16 et 17. L'entrée inverseuse de cet amplificateur est reliée à l'électrode commune Cm. Le condensateur C3 en parallèle avec l'interrupteur 16 sont connectés entre l'entrée inverseuse et la sortie de l'amplificateur 10. Le condensateur C4 est relié entre la sortie de l'amplificateur 10 et l'entrée du bloc intégrateur 5. Le condensateur C5 est connecté entre l'entrée non-inverseuse et une borne de référence de tension Vref, qui peut être par exemple égale à V_{SS}. Finalement, l'interrupteur 17 est disposé entre la sortie du bloc intégrateur 5 et l'entrée non-inverseuse de l'amplificateur 10.

Le bloc intégrateur 5, qui suit le bloc amplificateur à transfert de charges 4, comprend deux interrupteurs d'entrée 18 et 19, un amplificateur opérationnel 11 et un condensateur d'intégration Cf. Ce condensateur Cf est connecté entre l'entrée inverseuse et la sortie de l'amplificateur 11, qui fournit la tension de sortie Vm de l'intégrateur 5. L'interrupteur d'entrée 18 est disposé entre la borne de sortie du condensateur C4 du bloc à transfert de charges 4 et l'entrée non-inverseuse de l'amplificateur 11. Le potentiel de cette entrée non-inverseuse de l'amplificateur 11 est fixé à la référence de tension Vref. L'interrupteur 19 est disposé entre la borne de sortie du condensateur C4 du bloc à transfert de charges 4 et l'entrée inverseuse de l'amplificateur 11.

Le bloc d'excitation 3 comprend quatre interrupteurs 12, 13, 14 et 15, qui peuvent être formés par des transistors MOS de commutation dans le circuit intégré. Le premier interrupteur 12 est disposé entre la sortie de l'intégrateur 5 et l'électrode fixe du condensateur C1. Le second interrupteur 13 est disposé entre la sortie de l'intégrateur et l'électrode fixe du condensateur C2. Le troisième interrupteur 14 est disposé entre la borne de tension haute V_{DD} d'une source de tension continue et l'électrode fixe du condensateur C1. Finalement, le quatrième interrupteur 15 est disposé entre la borne de tension basse V_{SS} de la source de tension et l'électrode fixe du condensateur C2.

Dans un mode de fonctionnement normal du circuit électronique, chaque cycle ou période de mesure successif est divisé en deux phases P1 et P2 successives comme montré en partie à la figure 2. Le passage d'une phase à l'autre est commandé par des signaux d'horloge non représentés de manière à respectivement ouvrir ou fermer les interrupteurs. Chaque interrupteur est enclenché ou déclenché en tenant compte de conditions de recouvrement ou non recouvrement dans le temps pour chaque phase. Pour la première phase P1, les interrupteurs 12 et 13 sont fermés (enclenchés) pour décharger complètement les deux condensateurs à l'aide de la tension de sortie Vm comme montré par les diagrammes des tensions V_{C1}, V_{Cm} et V_{C2}. Les interrupteurs 16, 17 et 18 sont également fermés, alors que les interrupteurs 14 et 15 sont ouverts (déclenchés) dans cette première phase P1. Dans la seconde phase P2, les interrupteurs 14 et 15 sont fermés, alors que les interrupteurs 12, 13, 16, 17 et 18 sont ouverts. Dans cette seconde phase P2, la tension V_{DD} est appliquée à l'électrode fixe C1 vue au diagramme de V_{C1}, alors que la tension V_{SS} est appliquée à l'électrode fixe C2 vue au diagramme de V_{C2}. Si l'électrode mobile s'est déplacée d'une certaine distance en direction de l'une ou l'autre des électrodes fixes, les capacités des condensateurs vont varier inversement. Ceci conduira à une différence de charges accumulées par chaque condensateur, qui dépend également de la tension Vm appliquée précédemment à chaque électrode des condensateurs.

Pour effectuer le test automatique du circuit électronique 1 de manière traditionnelle, il doit être généré électroniquement une force électrostatique pour émuler par exemple une accélération ou une autre grandeur physique. Pour ce faire dans les cycles de mesure, la seconde phase P2 est remplacée au moins une fois sur deux cycles successifs par une phase de test TF comme montré à la figure 2. Dans cette phase de test TF, uniquement l'électrode fixe du condensateur C1 est polarisée à la tension haute V_{DD}, alors que l'électrode fixe du condensateur C2 est maintenue à la valeur de la précédente tension de sortie Vm, tout comme l'électrode mobile Cm. Dans cette phase de test TF, uniquement l'interrupteur 14 est fermé, car il n'y a pas d'opération d'intégration suivante lors de la génération de cette force électrostatique. L'électrode mobile est mécaniquement attirée volontairement vers l'unique électrode fixe polarisée du condensateur C1, ce qui émule par exemple une accélération à mesurer. Le déplacement de cette électrode mobile, dû à la force générée pendant chaque phase de test TF, est donc mesuré dans les cycles de mesure à l'aide d'une seconde phase de mesure P2 intervenant une fois sur deux en alternance avec chaque phase de test.

Après plusieurs cycles de fonctionnement pour le test automatique, la valeur finale de la tension Vm permet de fournir une indication de la force électrostatique volontairement générée. La figure 2 ne représente que la valeur finale Vm stabilisée montrée sur le diagramme de la tension V_{Cm}. Comme l'électrode mobile s'est déplacée en direction de l'électrode fixe du condensateur C1, cette tension de sortie Vm se trouve au-dessus de la tension intermédiaire ou médiane (V_{DD}+V_{SS})/2 de repos.

Avec un test automatique du fonctionnement du circuit électronique tel que décrit ci-devant, on constate que la force électrostatique générée est obtenue dans chaque phase de test en ne polarisant qu'une des électrodes fixes des condensateurs à l'aide de la tension haute d'une source de tension continue. Cette polarisation d'une des électrodes fixes aurait pu aussi être effectuée avec la tension basse. De ce fait, cette force électrostatique est fortement dépendante de la valeur de cette tension haute ou basse qui peut varier étant donné qu'elle est fournie par une batterie, qui peut se décharger, ce qui est un inconvénient. De plus, avec un tel test automatique de l'art antérieur, il n'est pas possible d'ajuster ou de programmer une force électrostatique déterminée fonction de tout type de capteur capacitif à tester, ce qui constitue un autre inconvénient.

On peut citer également la demande de brevet WO 2006/008207 qui décrit un circuit électronique muni d'un modulateur sigma delta. Ce circuit électronique pour la mesure d'une accélération est d'une structure différente de celle de la figure 1 décrite ci-dessus, car il est recherché de convertir directement un signal du type analogique relatif à la variation d'une valeur capacitive du capteur à condensateurs différentiels, en un signal du type numérique en sortie. Un agencement de différentes tensions de référence est également prévu pour polariser les électrodes fixes afin d'éliminer principalement toute tension d'offset pour linéariser le signal de sortie numérisé. Il peut être prévu également une fonction d'auto-test du circuit électronique en appliquant une force de champ électrostatique sur les électrodes du capteur. Cependant ce circuit ne permet pas de programmer une force déterminée fonction de tout type de capteur, ce qui est un inconvénient.

La demande de brevet EP 0 606 115 décrit un circuit détecteur, qui comprend des moyens pour effectuer une auto calibration du capteur en entrée. Une auto calibration est effectuée sur la portion qui comprend le capteur, par des moyens de stimulation commandés par une unité de traitement de signal, qui reçoit le signal de mesure de la portion de détection. Le capteur de ce circuit peut mesurer une accélération au moyen de condensateurs différentiels. Cependant il ne permet pas de programmer une force déterminée fonction de tout type de capteur, ce qui est un inconvénient.

L'invention a donc pour but principal de fournir un procédé de test automatique d'un circuit électronique à capteur capacitif qui permet de pallier les inconvénients cités ci-dessus pour le test de fonctionnement de tout type de capteur et de son interface électronique indépendamment de la variation de la tension d'alimentation du circuit électronique.

A cet effet, l'invention concerne un procédé de test automatique d'un circuit électronique à capteur capacitif cité ci-devant, qui comprend les caractéristiques mentionnées dans la revendication 1.

Des étapes particulières avantageuses du procédé sont définies dans les revendications dépendantes 2 à 5.

Un avantage du procédé de test automatique du circuit électronique à capteur capacitif est que la force électrostatique générée volontairement dans chaque phase de test dans des cycles de mesure successifs est totalement indépendante de toute variation de la tension d'alimentation du circuit. Cette force électrostatique de test est programmée ou ajustée par une tension de référence constante durant chaque phase de test en fonction également du type de capteur à contrôler. Cette tension de référence constante est produite à l'aide d'une tension à barrière de potentiel (tension bandgap) multipliée par un facteur parmi plusieurs facteurs mémorisés dépendant de la force désirée de test. Cette tension de référence fixe peut être ajoutée ou soustraite à la tension médiane ou intermédiaire de repos dans chaque phase de test pour ne polariser qu'une seule électrode fixe d'un des deux condensateurs. Comme cette tension de référence fixe est indépendante de la variation de la tension d'alimentation, la force électrostatique générée volontairement est bien déterminée pour chaque test du circuit électronique. La tension de sortie produite permet de fournir une indication de la force électrostatique générée sur la base de la tension de référence constante.

Avantageusement, il peut être prévu d'ajuster la largeur d'impulsion de la tension de référence constante dans chaque phase de test en fonction de la force électrostatique désirée.

A cet effet, l'invention concerne également un circuit électronique à capteur capacitif pour la mise en oeuvre du procédé de test automatique, qui comprend les caractéristiques définies dans la revendication 6.

Des formes d'exécution particulières du circuit électronique sont définies dans les revendications dépendantes 7 et 8.

Les buts, avantages et caractéristiques du procédé de test automatique d'un circuit électronique à capteur capacitif, ainsi que le circuit électronique pour sa mise en oeuvre apparaîtront mieux dans la description suivante en regard des dessins sur lesquels :
- la figure 1 déjà citée représente de manière simplifiée un circuit électronique à capteur capacitif de l'art antérieur,
- la figure 2 déjà citée représente un diagramme temporel de différentes phases de cycles de mesure d'un procédé de test automatique de l'art antérieur,
- la figure 3 représente de manière simplifiée une première forme d'exécution d'un circuit électronique à capteur capacitif pour la mise en oeuvre du procédé de test automatique selon l'invention,
- la figure 4 représente un diagramme temporel de différentes phases de cycles de mesure d'un procédé de test automatique selon l'invention du circuit électronique de la figure 3,
- la figure 5 représente de manière simplifiée une seconde forme d'exécution d'un circuit électronique à capteur capacitif pour la mise en oeuvre du procédé de test automatique selon l'invention, et
- la figure 6 représente un diagramme temporel de différentes phases de cycles de mesure d'un procédé de test automatique selon l'invention du circuit électronique de la figure 5.

Dans la description suivante comme les composants du circuit électronique à capteur capacitif ayant deux condensateurs montés en différentiel sont bien connus, ils ne seront pas explicités en détail.

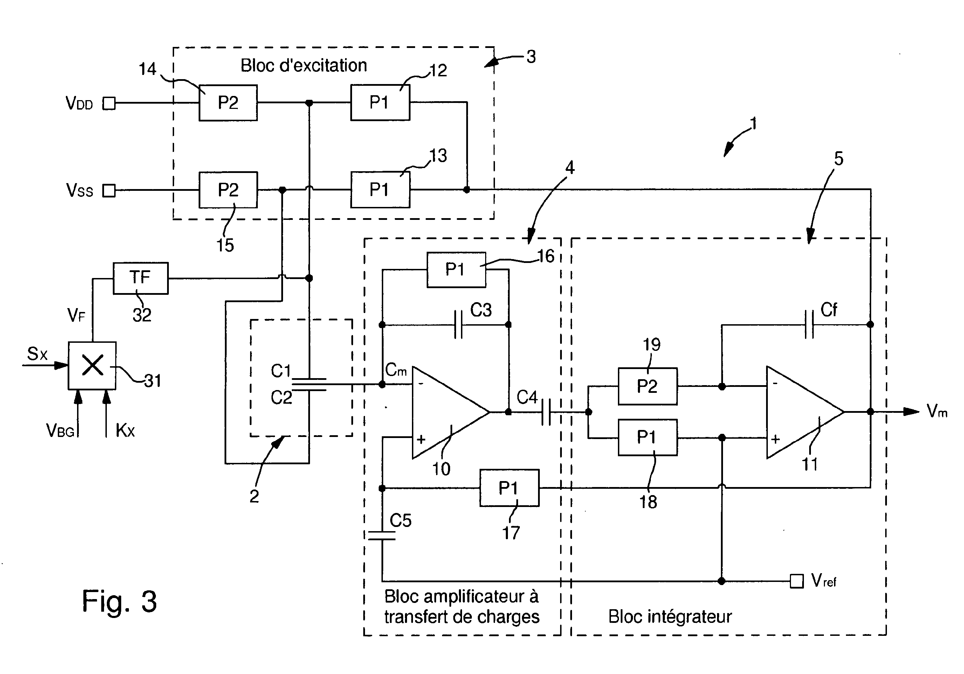

La figure 3 montre un schéma simplifié des différents composants du circuit électronique 1 à capteur capacitif 2 pour la mise en oeuvre du procédé de test automatique selon l'invention. Cette première forme d'exécution du circuit électronique 1 comprend un capteur capacitif 2 et un circuit d'interface relié au capteur pour fournir une tension de sortie de mesure Vm. Le capteur capacitif 2 comprend deux condensateurs C1 et C2 montés en différentiel ayant une électrode commune Cm susceptible de se déplacer entre deux électrodes fixes des deux condensateurs.

L'interface électronique du capteur 2 du circuit électronique 1 comprend un bloc amplificateur à transfert de charges 4, qui est relié en entrée à l'électrode commune Cm, un bloc intégrateur 5 pour fournir en permanence en sortie une tension Vm égale à l'intégrale des charges fournies par le bloc amplificateur 4, et un bloc d'excitation 3 pour cycliquement polariser les électrodes fixes à des niveaux de tension déterminés. Comme le bloc amplificateur 4, le bloc intégrateur 5 et le bloc d'excitation 3 de cette première forme d'exécution du circuit électronique 1 comprennent des éléments identiques à ceux décrits en référence à la figure 1, ils ne seront donc pas expliqués plus en détail.

La différence essentielle de cette première forme d'exécution du circuit électronique 1 de la figure 3 par rapport au circuit électronique de la figure 1, est qu'il comprend des moyens pour générer une tension de référence constante. Cette tension de référence constante est ajoutée ou soustraite à la tension intermédiaire de repos (V_{DD}+V_{SS})/2 de manière à être appliquée sur une des électrodes fixes des condensateurs pendant la phase de test. La tension de référence constante ajoutée ou soustraite à la tension intermédiaire est de préférence appliquée uniquement sur l'électrode fixe du condensateur C1 dans une phase de test, qui remplace en alternance une phase de polarisation par exemple chaque deux cycles successifs de mesure.

La tension de référence constante est obtenue sur la base d'une tension à barrière de potentiel V_{BG} définie comme une tension bandgap en terminologie anglaise, qui est multipliée dans un bloc multiplicateur 31 par un facteur Kₓ. Cette tension à barrière de potentiel est bien connue dans le domaine de conception de circuits intégrés, car elle permet de fournir une tension de valeur déterminée de l'ordre de 1.16 V, qui est indépendante de la température. Comme la réalisation d'un circuit de référence pour obtenir une telle tension à barrière de potentiel V_{BG} est bien connue dans ce domaine technique, il ne sera pas expliqué ci-après.

Le facteur Kₓ est représentatif de la force électrostatique à générer pour le procédé de test automatique du circuit électronique. Plusieurs facteurs Kₓ peuvent être mémorisés dans une mémoire non-volatile non représentée, qui est conçue sur un même substrat que l'interface électronique du capteur capacitif 2. Chaque facteur peut être mémorisé et sélectionné en fonction d'un type de capteur capacitif à tester ou d'une force électrostatique désirée à imposer au capteur dans le test automatique.

Le bloc multiplicateur 31 peut être réalisé de manière connue par exemple à l'aide d'une configuration à capacités commutées ou à l'aide également d'une configuration à diviseur résistif. Ce bloc multiplicateur peut être référencé à la tension intermédiaire (V_{DD}+V_{SS})/2 de manière à permettre de fournir facilement en sortie une tension référencée V_{F} qui comprend par exemple l'addition de la tension Kₓ·V_{BG} et de la tension médiane de repos (V_{DD}+V_{SS})/2. La tension intermédiaire de repos peut être égale à V_{DD}/2 si V_{SS} est à la masse. Bien entendu, le circuit de référence générant la tension à barrière de potentiel V_{BG} peut aussi être référencé à la tension intermédiaire (V_{DD}+V_{SS})/2. Un signal de sélection Sₓ permet de commander le bloc multiplicateur 31 pour fournir en sortie une tension V_{F}, qui peut être soit la tension médiane de repos pendant une partie de chaque phase de test, soit l'addition ou la soustraction d'une impulsion de la tension de référence Kₓ·V_{BG} à la tension médiane pendant une durée déterminée, qui peut être la durée totale de chaque phase de test.

Dans une phase de test comme expliqué ci-après en référence à la figure 4, cette tension V_{F} est appliquée directement sur l'électrode fixe du condensateur C1. Pour ce faire, un interrupteur 32, qui est disposé entre la sortie du bloc multiplicateur 31 et l'électrode fixe du condensateur C1, est fermé dans cette phase de test, alors que tous les autres interrupteurs sont ouverts.

II est à noter qu'un tel test automatique n'intervient qu'occasionnellement pendant toute la durée de fonctionnement du circuit électronique avec un minimum de composants électroniques supplémentaires. La consommation électrique pendant le test automatique est négligeable par rapport à la consommation totale du circuit électronique.

A la figure 4, il est représenté un diagramme temporel de différentes phases de cycles de mesure d'un procédé de test automatique selon l'invention du circuit électronique de la figure 3. Chaque phase est normalement d'une durée temporelle égale durant tout le procédé de test automatique. Uniquement les signaux de tension V_{C1}, V_{C2} et V_{Cm} sur les deux électrodes fixes des condensateurs C1 et C2 et l'électrode mobile Cm sont représentés. Bien entendu par simplification, les différentes phases du procédé de test automatique sont représentées alors que la tension de sortie Vm est déjà stabilisée.

Il est à noter que ce test automatique peut intervenir soit au début du fonctionnement du circuit électronique, soit au cours d'une mesure réelle par exemple d'une force. Pour une utilisation de ce circuit électronique dans un système "airbag" d'un véhicule, le test automatique intervient déjà au démarrage dudit véhicule.

Le principe d'agencement des différentes phases de mesure est identique à celui décrit ci-devant en référence à la figure 2. Pour le procédé de test automatique selon l'invention, ce n'est que la valeur de tension constante appliquée à l'électrode fixe du condensateur C1, qui est différente dans la phase de test TF. Par rapport, à la tension médiane de repos (V_{DD}+V_{SS})/2, une tension de référence constante Kₓ·V_{BG} est ajoutée à cette tension intermédiaire en fonction de la force électrostatique désirée. La valeur de cette tension de référence est constante pendant toute la durée de chaque phase de test TF, mais elle peut être changée en fonction du type de capteur à tester ou pour modifier à souhait la force électrostatique à générer.

Dans un mode de fonctionnement normal, plusieurs cycles de mesure successifs, par exemple 50 cycles, sont nécessaires pour obtenir une valeur finale de la tension de sortie stabilisée. Ce nombre de cycles est dépendant de la constante de temps du circuit électronique à capteur capacitif. Chaque cycle normal de mesure pour le circuit électronique de cette première forme d'exécution comprend une première phase P1 et une seconde phase P2. La première phase P1 permet de décharger complètement les deux condensateurs à l'aide de la tension de sortie Vm fourni par le bloc intégrateur comme montré par les diagrammes des tensions V_{C1}, V_{Cm} et V_{C2}. La seconde phase P2 permet de polariser les électrodes fixes des condensateurs C1 et C2. Dans cette seconde phase P2, la tension V_{DD} est appliquée à l'électrode fixe C1 vue au diagramme de V_{C1}, alors que la tension V_{SS} est appliquée à l'électrode fixe C2 vue au diagramme de V_{C2}.

Comme une force électrostatique est générée volontairement dans chaque phase de test TF sans opérer d'intégration suite à cette phase de test, l'électrode mobile s'est déplacée d'une certaine distance en direction de l'électrode fixe du condensateur C1. De ce fait, la seconde phase P2 de polarisation permet ainsi de mesurer le déplacement de l'électrode mobile par un transfert de charges et une opération subséquente d'intégration par le bloc intégrateur.

En regard des diagrammes présentés à la figure 4, on remarque qu'à la suite de chaque première phase P1, il y une alternance de phases de test TF et de phases de polarisation P2 dans la succession des cycles. Pour le procédé de test automatique, une fois sur deux cycles successifs, une phase de test TF intervient. Dans l'ordre temporel des diagrammes de cette figure 4, il est tout d'abord opéré la première phase P1 où chaque électrode des condensateurs est déchargée à la valeur de la tension de sortie Vm. A la suite de cette première phase P1, une phase de test TF intervient pour laquelle l'électrode fixe du second condensateur C2 et l'électrode mobile restent au potentiel Vm. Par contre, l'électrode fixe du premier condensateur C1 est polarisée durant toute la phase de test à une tension de référence constante Kₓ·V_{BG} au-dessus de la tension intermédiaire (V_{DD}+V_{SS})/2. Cette tension de référence constante est indépendante de toute variation de tension d'alimentation puisqu'elle se réfère par rapport à une tension médiane de repos. Cette phase de test TF est suivie par une première phase P1 où toutes les électrodes sont déchargées à la tension de sortie Vm. A la suite de cette première phase P1, une seconde phase de polarisation P2 intervient pour la mesure du déplacement de l'électrode mobile survenu suite à la phase de test TF. Cet agencement de phases se répètent cycliquement jusqu'au terme du test automatique du circuit électronique.

Bien entendu, dans chaque phase de test TF, il aurait pu aussi être imaginé de modifier la largeur de l'impulsion Tₓ de la tension de référence constante pendant la durée de chaque phase de test à l'image d'une modulation de largeur d'impulsions (PWM). Cette largeur d'impulsion est commandée par un signal de sélection appliqué au bloc multiplicateur. Ceci permet également de trimmer ou d'ajuster diverses valeurs de forces électrostatiques en maintenant un niveau constant de la tension de référence. Il peut aussi être envisagé qu'une phase de test intervienne en remplacement de la phase P2 tous les trois, quatre ou cinq cycles successifs de mesure plutôt que chaque deux cycles successifs.

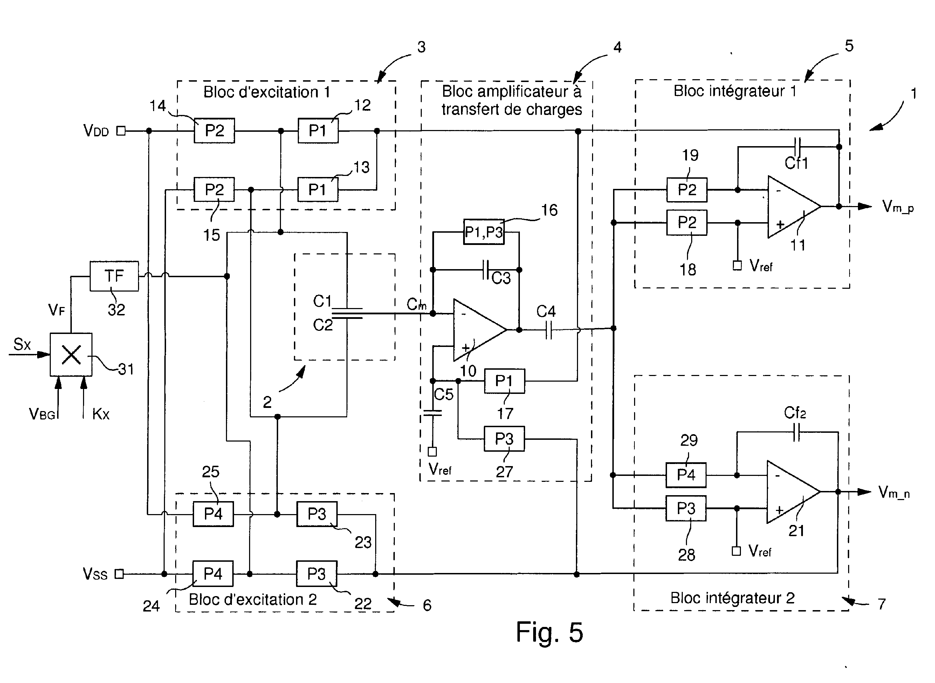

A la figure 5, une seconde forme d'exécution du circuit électronique 1 est présentée. Le circuit électronique 1 comprend un bloc amplificateur à transfert de charges 4, qui est relié en entrée à l'électrode commune Cm, un premier bloc intégrateur 5 et un second bloc intégrateur 7 de structure identique reliés au condensateur C4 en sortie du bloc amplificateur 4, un premier bloc d'excitation 3 disposé entre la sortie du premier bloc intégrateur 5 et le capteur 2, et un second bloc d'excitation 6 disposé entre la sortie du second bloc intégrateur 7 et le capteur 2. Le premier bloc intégrateur 5 fournit en permanence une tension de sortie Vm_p égale à l'intégrale des charges fournies par le bloc amplificateur 4, alors que le second bloc intégrateur 7 fournit en permanence en sortie une tension Vm_n inverse de la tension Vm_p par rapport à une tension intermédiaire ou médiane de repos (V_{DD}+V_{SS})/2. Chaque bloc d'excitation 3 et 6 polarise alternativement et cycliquement les électrodes fixes à des niveaux de tension spécifiés comme décrit ci-après.

Le bloc multiplicateur 31 et l'interrupteur 32 sont identiques à ceux expliqués en référence à la figure 3. Une tension de référence constante est obtenue par multiplication d'une tension à barrière de potentiel V_{BG} par un facteur Kₓ dépendant du capteur à tester et de la valeur de la force électrostatique à générer. Un signal de sélection Sₓ permet de commander le bloc multiplicateur 31 pour fournir en sortie une tension V_{F}, qui peut être soit la tension médiane de repos pendant une partie de chaque phase de test, soit l'addition d'une impulsion de la tension de référence Kₓ·V_{BG} à la tension médiane pendant une durée déterminée dans chaque phase de test.

Dans un mode de fonctionnement normal, chaque cycle de mesure est composé de quatre phases successives P1, P2, P3 et P4. Une première phase P1 de décharge des électrodes des condensateurs C1 et C2 par la tension de sortie Vm_p du premier bloc intégrateur 5, suivi d'une seconde phase P2 de polarisation par l'intermédiaire du premier bloc d'excitation 3. Une troisième phase P3 de décharge des électrodes des condensateurs C1 et C2 par la tension de sortie Vm_n du second bloc intégrateur 7, suivi d'une quatrième phase P4 de polarisation inversée par l'intermédiaire du second bloc d'excitation 6. De par cet agencement des phases dans chaque cycle de mesure, il est ainsi possible de symétriser le fonctionnement du circuit électronique, et ainsi de permettre de compenser les non linéarités par exemple dues aux condensateurs parasites.

Le premier bloc d'excitation 3 comprend quatre interrupteurs 12, 13, 14 et 15, qui peuvent être formés par des transistors MOS de commutation dans le circuit intégré. Comme pour le circuit électronique des figures 1 et 3, le premier interrupteur 12 est disposé entre la sortie du premier bloc intégrateur 5 et l'électrode fixe du condensateur C1. Le second interrupteur 13 est disposé entre la sortie du premier bloc intégrateur et l'électrode fixe du condensateur C2. Le troisième interrupteur 14 est disposé entre la borne de tension haute V_{DD} d'une source de tension constante et l'électrode fixe du condensateur C1. Finalement, le quatrième interrupteur 15 est disposé entre la borne de tension basse V_{SS} de la source de tension et l'électrode fixe du condensateur C2.

Le second bloc d'excitation 6 est d'une structure similaire au premier bloc d'excitation 3. Ce second bloc d'excitation 6 comprend également quatre interrupteurs 22, 23, 24 et 25 formés par des transistors MOS dans le circuit intégré. Le premier interrupteur 22 est disposé entre la sortie du second bloc intégrateur 7 et l'électrode fixe du condensateur C1. Le second interrupteur 23 est disposé entre la sortie du second bloc intégrateur 7 et l'électrode fixe du condensateur C2. Le troisième interrupteur 24 est disposé entre la borne de tension basse V_{SS} et l'électrode fixe du condensateur C1. Finalement, le quatrième interrupteur 25 est disposé entre la borne de tension haute V_{DD} et l'électrode fixe du condensateur C2.

L'amplificateur à transfert de charges 4 et le premier bloc intégrateur 5 comprennent des éléments identiques à ceux décrits en référence aux figures 1 et 3. Uniquement la référence Cf1 du premier bloc intégrateur 5 est différente. De ce fait, par simplification, tous ces éléments ne seront pas à nouveau expliqués.

Le second bloc intégrateur 7, qui suit le bloc amplificateur 4, comprend également deux interrupteurs d'entrée 28 et 29, un amplificateur opérationnel 21 et un condensateur d'intégration Cf2. Ce condensateur Cf2 est connecté entre l'entrée inverseuse et la sortie de l'amplificateur 21, qui fournit la tension de sortie Vm_n du second bloc intégrateur 7. L'interrupteur d'entrée 28 est disposé entre la borne de sortie du condensateur C4 du bloc à transfert de charges 4 et l'entrée non-inverseuse de l'amplificateur 21. Le potentiel de cette entrée non-inverseuse de l'amplificateur 21 est fixé à la référence de tension Vref. L'interrupteur 29 est disposé entre la borne de sortie du condensateur C4 du bloc à transfert de charges 4 et l'entrée inverseuse de l'amplificateur 21. Finalement, un interrupteur 27 est disposé entre la sortie du second bloc intégrateur 7 et l'entrée non-inverseuse de l'amplificateur 10.

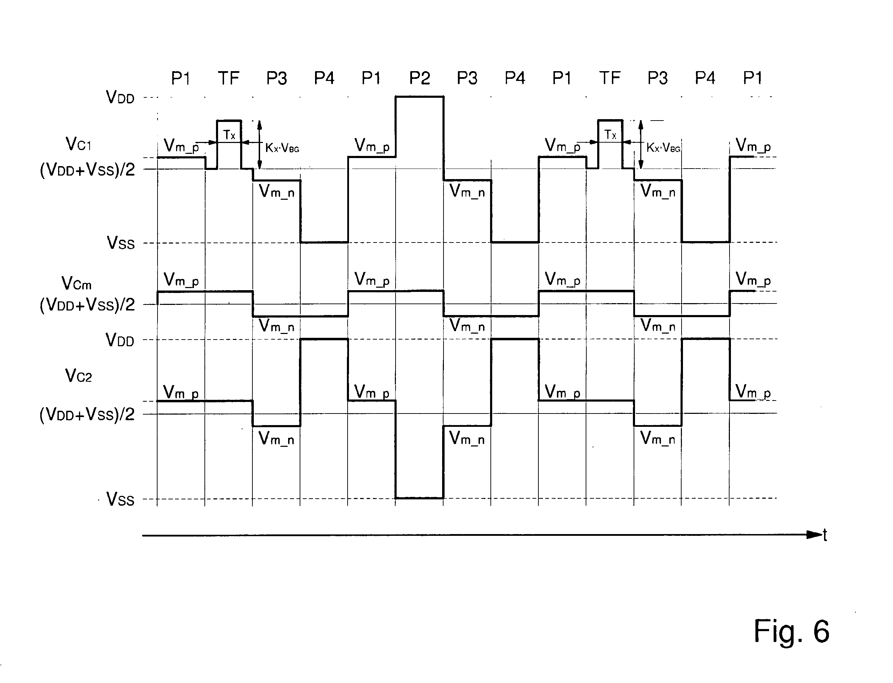

Pour le procédé de test automatique du circuit électronique en mode de fonctionnement, chaque cycle normal ou période successif de fonctionnement est divisé en quatre phases P1 à P4 comme montré en partie à la figure 6. Le passage d'une phase à l'autre est commandé par des signaux d'horloge non représentés de manière à respectivement ouvrir ou fermer notamment les interrupteurs des premier et second blocs d'excitation 3 et 6. Les interrupteurs des différents blocs sont fermés dans chaque cycle de mesure en fonction du numéro de la phase correspondante indiquée dans les cadres de chaque interrupteur montré à la figure 5. Dans les deux premières phases P1 et P2, le premier bloc intégrateur 5, ainsi que le premier bloc d'excitation 3 sont en fonction, alors que dans les troisième et quatrième phases P3 et P4, le second bloc intégrateur 7, ainsi que le second bloc d'excitation 6 sont en fonction. De ce fait, à chaque demi-période d'un cycle normal de mesure, les premiers bloc intégrateur 5 et bloc d'excitation 3, et les seconds bloc intégrateur 7 et bloc d'excitation 6 sont alternativement enclenchés symétriquement. Ceci permet de linéariser les mesures effectuées par le circuit électronique à l'aide des deux tensions de sortie Vm_p et Vm_n produites.

Comme expliqué en référence aux figures 2 et 4, une phase de test TF pour la génération d'une force électrostatique volontaire intervient au moins une fois sur deux cycles successifs en remplacement de la phase de polarisation P2. Dans cette phase de test TF, la force électrostatique est générée en ne polarisant que l'électrode fixe du condensateur C1 à une tension de référence constante Kₓ·V_{BG} par exemple au-dessus de la tension intermédiaire ou médiane de repos (V_{DD}+V_{SS})/2. L'électrode fixe du condensateur C2 et l'électrode mobile Cm reste au niveau de la tension de sortie Vm_p du premier bloc intégrateur. Toutefois à cette figure 6, cette tension de référence constante Kₓ·V_{BG} est d'une largeur d'impulsion d'une durée temporelle Tₓ déterminée plus petite que la durée de la phase de test en fonction de la force électrostatique désirée. En maintenant un niveau constant de la tension de référence, il est donc possible de modifier la force à générer uniquement en ajustant la largeur de cette impulsion dans chaque phase de test TF.

En regard des diagrammes des tensions V_{C1}, V_{Cm} et V_{C2} représentés à la figure 6, les différentes phases du test automatique sont expliquées dans un ordre chronologique dans le temps. Bien entendu par simplification, uniquement les tensions de sortie Vm_p et Vm_n stabilisées sont représentées.

Tout d'abord dans la première phase P1, la tension Vm_p présente en sortie du premier bloc intégrateur est appliquée à chaque électrode du capteur. Cette tension se trouve au-dessus de la tension intermédiaire de repos (V_{DD}+V_{SS})/2. Ceci permet de décharger complètement les deux condensateurs comme montré par les diagrammes des tensions V_{C1}, V_{Cm} et V_{C2}. A la suite de cette première phase, une phase de test TF intervient. Dans cette phase de test uniquement l'électrode fixe du condensateur C1 est polarisée par une impulsion de tension de référence constante K_{x·}V_{BG} de durée Tₓ ajoutée à la tension médiane de repos (V_{DD}+V_{SS})/2. Dans cette phase de test TF, uniquement l'interrupteur relié au bloc multiplicateur est fermé, car il ne doit pas y avoir d'intégration suite à la force électrostatique volontairement générée. Dans la phase P3, la tension Vm_n présente en sortie du second bloc intégrateur est appliquée à chaque électrode du capteur. Cette tension Vm_n est au-dessous de la tension intermédiaire ou médiane de repos (V_{DD}+V_{SS})/2. Dans la phase P4, l'électrode fixe du premier condensateur C1 est polarisée à V_{SS} alors que l'électrode fixe du second condensateur C2 est polarisée inversement à V_{DD}.

A la suite de cette phase P4, un cycle normal de mesure intervient où dans la phase P1 une intégration d'un transfert de charges suite à la phase P4 précédente intervient dans le second bloc intégrateur pour fournir la tension de sortie Vm_n dans la phase P3. Dans cette nouvelle phase P1, la tension Vm_p présente en sortie du premier bloc intégrateur est à nouveau appliquée à chaque électrode du capteur. Cependant à la suite de cette phase P1, une phase de polarisation normale P2 intervient pour polariser l'électrode fixe du condensateur C1 à V_{DD} et polariser l'électrode fixe du condensateur C2 à V_{SS}. De cette manière suite au déplacement de l'électrode mobile imposée par la force électrostatique générée, un transfert de charges et une intégration par le premier bloc intégrateur peut s'opérer dans la phase P3 après la phase P2. Les phases P3 et P4 sont identiques dans tous les cycles de mesure successifs.

Après plusieurs cycles de mesure, par exemple 50 cycles, l'écart de tension finale entre Vm_p et (V_{DD}+V_{SS})/2 et l'écart de tension finale entre Vm_n et (V_{DD}+V_{SS})/2 sont égaux. Ceci permet de traiter deux signaux de mesure dans un circuit de traitement non représenté de manière à compenser les non-linéarités mentionnées ci-dessus.

Comme la phase de test TF n'intervient qu'une fois sur deux cycles successifs en remplacement d'une phase de polarisation P2, la tension de sortie Vm_p du premier bloc intégrateur converge vers sa valeur finale stabilisée deux fois moins vite que la tension de sortie Vm_n du second bloc intégrateur. Cependant, les deux tensions de sortie stabilisées Vm_p et Vm_n permettent d'estimer la force électrostatique volontairement générée, qui est proportionnelle à ((V_{DD}+V_{SS})/2)² pour le contrôle du fonctionnement du circuit électronique.

Bien entendu, il peut aussi être envisagé qu'une phase de test TF intervienne en remplacement de la phase P2 tous les trois, quatre ou cinq cycles successifs de mesure plutôt que chaque deux cycles successifs comme décrit ci-dessus. De plus, la période d'enclenchement de chaque interrupteur dans chacune des phases peut être légèrement décalée et différente dans le temps l'une de l'autre pour ne pas causer de perturbations dans les différentes étapes lors du passage d'une phase à l'autre.

Pour donner un ordre de grandeur non limitatif quant à la portée de l'invention, la capacité C1 ou C2 de chaque condensateur peut être de l'ordre de 450 fF au repos. La capacité du condensateur C3 peut être de l'ordre de 600 fF. La capacité du condensateur C4 peut être de l'ordre de 1 pF. La capacité du condensateur C5 peut être de l'ordre de 1.8 pF. Finalement, la capacité des condensateurs Cf1 et Cf2 peut être de l'ordre de 5 pF. Chaque phase de chaque cycle est approximativement de l'ordre de 6 µs, ce qui donne une tension finale de mesure dans le procédé de test automatique après environ 1 ms. De plus, le capteur peut être configuré de telle manière que le circuit électronique 1 fournisse un écart de tension entre la tension de sortie Vm_p et la tension intermédiaire (V_{DD}+V_{SS})/2 de 20 mV pour 1 g d'accélération par exemple.

A partir de la description qui vient d'être faite, de multiples variantes de réalisation du procédé de test automatique du circuit électronique à capteur capacitif, ainsi que du circuit électronique, peuvent être conçues par l'homme du métier sans sortir du cadre de l'invention définie par les revendications. Il peut être envisagé de polariser l'électrode fixe du second condensateur en lieu et place de l'électrode fixe du premier condensateur. De plus dans chaque phase de test, la tension de référence constante peut être soustraite ou ajoutée à la tension médiane de repos ou à une tension de sortie pour générer une force électrostatique tendant à rapprocher l'électrode mobile de l'électrode fixe du second condensateur. Cette force électrostatique peut être modifiée au cours du test en changeant soit le facteur multiplicatif de la tension à barrière de potentiel, soit la durée d'impulsion de la tension de référence constante, ou les deux. Chaque phase de test peut également intervenir en remplacement de deux phases de polarisation au moins un cycle sur deux cycles successifs.

## Revendications

1. Procédé de test automatique d'un circuit électronique à capteur capacitif (2), qui comprend deux condensateurs (C1, C2) montés en différentiel dont une électrode commune (Cm) est susceptible de se déplacer par rapport à chaque électrode fixe des deux condensateurs pour modifier la valeur capacitive de chaque condensateur lors d'une mesure d'un paramètre physique, le circuit électronique (1) comprenant le capteur capacitif (2) et une interface électronique du capteur, qui comprend un bloc amplificateur à transfert de charges (4) relié à une électrode mobile commune aux condensateurs du capteur, un bloc intégrateur (5) connecté en sortie du bloc amplificateur pour intégrer des charges fournies par le bloc amplificateur et fournir une tension de sortie de mesure (Vm), et un bloc d'excitation (3) disposé entre la sortie du bloc intégrateur et le capteur pour polariser inversement dans un mode de fonctionnement normal chaque électrode fixe des condensateurs à une tension haute (V_{DD}) ou à une tension basse (V_{SS}) d'une source de tension constante par rapport à une tension médiane de repos du capteur entre la tension haute et la tension basse, ou pour décharger chaque condensateur par la tension de sortie du bloc intégrateur,
le procédé de test automatique comprenant dans un mode de fonctionnement normal plusieurs cycles successifs de mesure divisés chacun en au moins deux phases successives, qui consistent
- dans une première phase (P1) à décharger les deux condensateurs (C1, C2, Cm) par la tension de sortie (Vm) fourni par le bloc intégrateur (5) et
- dans une seconde phase (P2) à polariser l'électrode fixe du premier condensateur (C1) par la tension haute ou la tension basse de la source de tension et à polariser inversement l'électrode fixe du second condensateur (C2) par la tension basse ou la tension haute de la source de tension,
**caractérisé en ce que** dans un mode de test, le procédé comprend une phase de test (TF) en remplacement d'une seconde phase de polarisation (P2), qui intervient au moins un cycle sur plusieurs cycles successifs de mesure, dans la phase de test une seule électrode fixe d'un des condensateurs étant polarisée à chaque phase de test par une tension de polarisation (V_{F}) supérieure à la tension basse (V_{SS}) et inférieure à la tension haute (V_{DD}), cette tension de polarisation étant obtenue sur la base d'une tension de référence constante (Kₓ·V_{BG}), qui est ajoutée ou soustraite à la tension médiane de repos du capteur (2) ou à la tension de sortie (Vm) du bloc intégrateur, le niveau de cette tension de référence constante étant programmé ou ajusté en fonction d'une force électrostatique désirée à générer volontairement pour le test automatique du circuit électronique et indépendante de toute variation de la tension haute ou de la tension basse.

2. Procédé de test automatique selon la revendication 1, **caractérisé en ce que** la tension de référence constante (Kₓ·V_{BG}) est obtenue sur la base d'une tension à barrière de potentiel (V_{BG}) d'un circuit de référence, qui est multipliée dans un bloc multiplicateur (31) par un facteur déterminé (Kₓ) parmi plusieurs facteurs mémorisés représentatif d'une force électrostatique désirée à générer volontairement pour le déplacement de l'électrode mobile en phase de test (TF).

3. Procédé de test automatique selon l'une des revendications précédentes, **caractérisé en ce que** toutes les phases des cycles successifs de mesure ont une durée temporelle égale, **en ce qu'**une phase de test (TF) intervient en alternance avec une seconde phase de polarisation (P2) un cycle sur deux cycles successifs, et **en ce que** la tension de référence constante est ajoutée ou soustraite à la tension médiane pour polariser l'électrode fixe d'un des condensateurs pendant toute la durée de chaque phase de test.

4. Procédé de test automatique selon l'une des revendications 1 et 2, **caractérisé en ce que** dans chaque phase de test (TF), une impulsion de la tension de référence constante (Kₓ·V_{BG}) est ajoutée ou soustraite à la tension médiane, la largeur d'impulsion de la tension de référence constante étant d'une durée temporelle (Tₓ) déterminée plus petite que la durée de chaque phase de test, la durée temporelle déterminée pouvant être ajustée selon une force électrostatique désirée à générer.

5. Procédé de test automatique selon l'une des revendications précédentes, pour lequel le circuit électronique (1) comprend deux blocs intégrateurs (5, 7) connectés chacun en sortie du bloc amplificateur (4) pour intégrer alternativement et cycliquement des charges fournies par le bloc amplificateur et fournir une première tension de sortie de mesure (Vm_p) pour le premier bloc intégrateur (5) et une seconde tension de sortie de mesure (Vm_n) pour le second bloc intégrateur (7), et deux blocs d'excitation (3), dont le premier bloc d'excitation est disposé entre la sortie du premier bloc intégrateur et le capteur (2), et le second bloc d'excitation est disposé entre la sortie du second bloc intégrateur et le capteur, le premier bloc d'excitation polarisant les électrodes fixes des condensateurs à la tension haute pour une des électrodes fixes et à la tension basse pour l'autre électrode fixe, ou déchargeant chaque condensateur par la tension de sortie du premier bloc intégrateur, alors que le second bloc d'excitation polarise chaque électrode fixe de manière inverse au premier bloc d'excitation avec la tension basse pour une des électrodes fixes et la tension haute pour l'autre électrode fixe, ou décharge chaque condensateur par la tension de sortie du second bloc intégrateur,
le procédé de test automatique comprenant dans un mode de fonctionnement normal plusieurs cycles successifs de mesure divisés chacun en quatre phases successives, qui consistent
- dans une première phase (P1) à mettre en fonction le premier bloc intégrateur (5) avec le premier bloc d'excitation (3) et au repos le second bloc intégrateur (7) avec le second bloc d'excitation (6), pour décharger les deux condensateurs (C1, C2) par la tension de sortie (Vm_p) fourni par le premier bloc intégrateur (5),
- dans une seconde phase (P2) où le premier bloc intégrateur et le premier bloc d'excitation sont en fonction, à polariser l'électrode fixe du premier condensateur (C1) à une tension haute (V_{DD}), et l'électrode fixe du second condensateur (C2) à une tension basse (V_{SS}),
- dans une troisième phase (P3) à mettre en fonction le second bloc intégrateur (7) avec le second bloc d'excitation (6) et au repos le premier bloc intégrateur (5) avec le premier bloc d'excitation (3), pour décharger les deux condensateurs (C1, C2) par la tension de sortie (Vm_n) fourni par le second bloc intégrateur (7), et
- dans une quatrième phase (P4) où le second bloc intégrateur et le second bloc d'excitation sont en fonction, à polariser l'électrode fixe du premier condensateur (C1) à une tension basse (V_{SS}), et l'électrode fixe du second condensateur (C2) à une tension haute (V_{DD}),
**caractérisé en ce que** dans un mode de test, le procédé comprend une phase de test (TF) en remplacement d'une seconde phase de polarisation (P2), qui intervient au moins un cycle sur deux cycles successifs de mesure, où une seule électrode fixe d'un des condensateurs est polarisée à chaque phase de test par la tension de polarisation (V_{F}), qui est obtenue par la tension de référence constante (Kₓ·V_{BG}) ajustée à la force électrostatique désirée.

6. Circuit électronique (1) à capteur capacitif (2) convenant à la mise en oeuvre du procédé de test automatique selon l'une des revendications précédentes, le circuit électronique (1) comprenant le capteur capacitif (2), qui comprend deux condensateurs (C1, C2) montés en différentiel dont une électrode commune (Cm) est susceptible de se déplacer par rapport à chaque électrode fixe des deux condensateurs pour modifier la valeur capacitive de chaque condensateur lors d'une mesure d'un paramètre physique, et une interface électronique du capteur, qui comprend un bloc amplificateur à transfert de charges (4) relié à une électrode mobile commune aux condensateurs du capteur, un bloc intégrateur (5) connecté en sortie du bloc amplificateur pour intégrer des charges fournies par le bloc amplificateur et fournir une tension de sortie de mesure (Vm), et un bloc d'excitation (3) disposé entre la sortie du bloc intégrateur et le capteur pour polariser inversement dans un mode de fonctionnement normal chaque électrode fixe des condensateurs à une tension haute (V_{DD}) ou à une tension basse (V_{SS}) d'une source de tension constante par rapport à une tension médiane de repos du capteur entre la tension haute et la tension basse, ou pour décharger chaque condensateur par la tension de sortie du bloc intégrateur, **caractérisé en ce qu'**il comprend un bloc multiplicateur (31) pour multiplier une tension à barrière de potentiel (V_{BG}) d'un circuit de référence, par un facteur déterminé (Kₓ) parmi plusieurs facteurs mémorisés représentatif d'une force électrostatique désirée à générer volontairement, afin de produire une tension de référence constante (Kₓ·V_{BG}) à ajouter ou à soustraire de la tension médiane pour polariser une seule des électrodes fixes dans chaque phase de test (TF) du circuit électronique.

7. Circuit électronique (1) selon la revendication 6, **caractérisé en ce qu'**il comprend un interrupteur (32) disposé entre la sortie du bloc multiplicateur (31) et une des électrodes fixes des condensateurs à polariser dans chaque phase de test (TF), ledit interrupteur commandé par des signaux d'horloge étant fermé dans chaque phase de test, et **en ce que** le bloc multiplicateur (31) est commandé par un signal de sélection (Sₓ) pour produire une impulsion de tension de référence constante ajoutée ou soustraite à la tension médiane de repos, qui a une durée temporelle déterminée (Tₓ) inférieure à la durée de chaque phase de test, pour ajuster la force électrostatique à générer dans chaque phase de test.

8. Circuit électronique (1) selon l'une des revendications 6 et 7, **caractérisé en ce qu'**il comprend deux blocs intégrateurs (5, 7) connectés chacun en sortie du bloc amplificateur (4) pour intégrer alternativement et cycliquement des charges fournies par le bloc amplificateur et fournir une première tension de sortie de mesure (Vm_p) pour le premier bloc intégrateur (5) et une seconde tension de sortie de mesure (Vm_n) pour le second bloc intégrateur (7), et deux blocs d'excitation (3), dont le premier bloc d'excitation est disposé entre la sortie du premier bloc intégrateur et le capteur (2), et le second bloc d'excitation est disposé entre la sortie du second bloc intégrateur et le capteur, le premier bloc d'excitation polarisant les électrodes fixes des condensateurs à la tension haute pour une des électrodes fixes et à la tension basse pour l'autre électrode fixe, ou déchargeant chaque condensateur par la tension de sortie du premier bloc intégrateur, alors que le second bloc d'excitation polarise chaque électrode fixe de manière inverse au premier bloc d'excitation avec la tension basse pour une des électrodes fixes et la tension haute pour l'autre électrode fixe, ou décharge chaque condensateur par la tension de sortie du second bloc intégrateur.

## Claims

1. Method of automatically testing an electronic circuit with a capacitive sensor (2), which includes two differential mounted capacitors (C1, C2) whose common electrode (Cm) is able to move relative to each fixed electrode of the two capacitors to alter the capacitive value of each capacitor during measurement of a physical parameter, the electronic circuit (1) including the capacitive sensor (2) and an electronic interface of the sensor, which includes a charge transfer amplifier unit (4) connected to a moving electrode common to the sensor capacitors, an integrator unit (5) connected to the output of the amplifier unit to integrate the charges provided by the amplifier unit and to provide a measurement output voltage (Vm), and an excitation unit (3) arranged between the output of the integrator unit and the sensor for inversely polarizing each fixed electrode of the capacitors in normal operating mode at a high voltage (V_{DD}) or a low voltage (Vss) of a constant voltage source relative to a median rest voltage of the sensor between the high voltage and the low voltage, or for discharging each capacitor by the output voltage of the integrator unit,
the automatic test method including in normal operating mode several successive measuring cycles each divided into at least two successive phases, which consist
- in a first phase (P1) in discharging the two capacitors (C1, C2, Cm) by the output voltage (Vm) provided by the integrator unit (5) and
- in a second phase (P2) in polarizing the fixed electrode of the first capacitor (C1) by the high voltage or low voltage of the voltage source and in inversely polarizing the fixed electrode of the second capacitor (C2) by the low voltage or the high voltage of the voltage source,
**characterized in that** in a test mode, the method includes a test phase (TF) replacing a second polarizing phase (P2), which occurs in at least one cycle every several successive measurement cycles, in the test phase only one fixed electrode of one of the capacitors being polarized at each test phase by a polarizing voltage (V_{F}) higher than the low voltage (V_{SS}) and lower than the high voltage (V_{DD}), this polarizing voltage being obtained on the basis of a constant reference voltage (Kₓ·V_{BG}), which is added to or subtracted from the median rest voltage of the sensor (2) or to or from the output voltage (Vm) of the integrator unit, the level of this constant reference voltage being programmed or adjusted as a function of a desired electrostatic force to be generated deliberately for the automatic test of the electronic circuit and independent of any variation in the high voltage or low voltage.

2. Automatic test method according to claim 1, **characterized in that** the constant reference voltage (Kₓ·V_{BG}) is obtained on the basis of a bandgap voltage (V_{BG}) of a reference circuit, which is multiplied in a multiplier unit (31) by a determined factor (Kₓ) from among several stored factors representative of a desired electrostatic force to be deliberately generated for moving the moving electrode in test phase (TF).

3. Automatic test method according to any of the preceding claims, **characterized in that** all the phases of the successive measuring cycles have an equal time duration, **in that** a test phase (TF) occurs alternately with a second polarizing phase (P2) in one of every two successive cycles, and **in that** the constant reference voltage is added to or subtracted from the median voltage to polarize the fixed electrode of one of the capacitors during the entire duration of each test phase.

4. Automatic test method according to any of claims 1 and 2, **characterized in that** in each test phase (TF), a pulse of the constant reference voltage (Kₓ·V_{BG}) is added to or subtracted from the median voltage, the pulse width of the constant reference voltage having a smaller determined time duration (Tₓ) to the duration of each test phase, the determined time duration being able to be adjusted in accordance with a desired electrostatic force to be generated.

5. Automatic test method according to any of the preceding claims, wherein the electronic circuit (1) includes two integrator units (5, 7) each connected at output to the amplifier unit (4) for integrating alternately and cyclically the charges provided by the amplifier unit and for providing a first measurement output voltage (Vm_p) for the first integrator unit (5) and a second measuring output voltage (Vm_n) for the second integrator unit (7), and two excitation units (3), of which the first excitation unit is arranged between the output of the first integrator unit and the sensor (2), and the second excitation unit is arranged between the output of the second integrator unit and the sensor, the first excitation unit polarizing the fixed electrodes of the capacitors at the high voltage for one of the fixed electrodes and at the low voltage for the other fixed electrode, or discharging each capacitor by the output voltage of the first integrator unit, whereas the second excitation unit polarizes each fixed electrode inversely to the first excitation unit with the low voltage for one of the fixed electrodes and the high voltage for the other fixed electrode, or discharges each capacitor by the output voltage of the second integrator unit,
the automatic test method including in normal operating mode several successive measuring cycles each divided into four successive phases, which consist
- in a first phase (P1) in switching on the first integrator unit (5) with the first excitation unit (3) and setting at rest the second integrator unit (7) with the second excitation unit (6), for discharging the two capacitors (C1, C2) by the output voltage (Vm_p) provided by the first integrator unit (5),
- in a second phase (P2) where the first integrator unit and the first excitation unit are operating, in polarizing the fixed electrode of the first capacitor (C1) at a high voltage (V_{DD}) and the fixed electrode of the second capacitor (C2) at a low voltage (Vss),
- in a third phase (P3) in switching on the second integrator unit (7) with the second excitation unit (6) and setting at rest the first integrator unit (5) with the first excitation unit (3), for discharging the two capacitors (C1, C2) by the output voltage (Vm_n) provided by the second integrator unit (7), and
- in a fourth phase (P4) where the second integrator unit and the second excitation unit are operating, in polarizing the fixed electrode of the first capacitor (C1) at a low voltage (V_{SS}) and the fixed electrode of the second capacitor (C2) at a high voltage (V_{DD}),
**characterized in that** in test mode, the method includes a test phase (TF) replacing a second polarizing phase (P2), which occurs in at least one cycle every two successive measuring cycles, where only one fixed electrode of one of the capacitors is polarized at each test phase by the polarizing voltage (V_{F}), which is obtained by the constant reference voltage (Kₓ·V_{BG}) adjusted to the desired electrostatic force.

6. Electronic circuit (1) with a capacitive sensor (2) suited for implementing the automatic test method according to any of the preceding claims, the electronic circuit (1) including the capacitive sensor (2), which includes two differential mounted capacitors (C1, C2) whose common electrode (Cm) is able to move relative to each fixed electrode of the two capacitors to alter the capacitive value of each capacitor during measurement of a physical parameter, and an electronic interface of the sensor, which includes a charge transfer amplifier unit (4) connected to a moving electrode common to the sensor capacitors, an integrator unit (5) connected to the output of the amplifier unit to integrate the charges provided by the amplifier unit and to provide a measurement output voltage (Vm), and an excitation unit (3) arranged between the output of the integrator unit and the sensor for inversely polarizing each fixed electrode of the capacitors in normal operating mode at a high voltage (V_{DD}) or a low voltage (V_{SS}) of a constant voltage source relative to a median rest voltage of the sensor between the high voltage and the low voltage, or for discharging each capacitor by the output voltage of the integrator unit, **characterized in that** it includes a multiplier unit (31) for multiplying a bandgap voltage (V_{BG}) of a reference circuit, by a determined factor (Kₓ) from among several stored factors representative of a desired electrostatic force to be generated deliberately, in order to produce a constant reference voltage (Kₓ·V_{BG}) to be added to or subtracted from the median voltage in order to polarize only one of the fixed electrodes in each test phase (TF) of the electronic circuit.

7. Electronic circuit (1) according to claim 6, **characterized in that** it includes a switch (32) arranged between the output of the multiplier unit (31) and one of the fixed electrodes of the capacitors to be polarized in each test phase (TF), said switch controlled by clock signals being closed in each test phase, and **in that** the multiplier unit (31) is controlled by a selection signal (Sₓ) for generating a constant reference voltage pulse added to or subtracted from the median rest voltage, which has a determined time duration (Tₓ) less than the duration of each test phase, in order to adjust the electrostatic force to be generated in each test phase.

8. Electronic circuit (1) according to any of claims 6 or 7, **characterized in that** it includes two integrator units (5, 7) each connected to the output of the amplifier unit (4) to integrate alternately and cyclically charges provided by the amplifier unit and to provide a first measurement output voltage (Vm_p) for the first integrator unit (5) and a second measurement output voltage (Vm_n) for the second integrator unit (7), and two excitation units (3), of which the first excitation unit is arranged between the output of the first integrator unit and the sensor (2), and the second excitation unit is arranged between the output of the second integrator unit and the sensor, the first excitation unit polarizing the fixed electrodes of the capacitors at the high voltage for one of the fixed electrodes and at the low voltage for the other fixed electrode, or discharging each capacitor by the output voltage of the first integrator unit, whereas the second excitation unit polarizes each fixed electrode inversely to the first excitation unit with the low voltage for one of the fixed electrodes and the high voltage for the other fixed electrode, or discharges each capacitor by the output voltage of the second integrator unit.

## Patentansprüche

1. Verfahren zum automatischen Testen einer elektronischen Schaltung mit kapazitivem Sensor (2), die zwei Kondensatoren (C1, C2) in differentieller Schaltung umfasst, wobei sich eine gemeinsame Elektrode (Cm) in Bezug auf jede feste Elektrode der zwei Kondensatoren verlagern kann, um den Kapazitätswert jedes Kondensators bei einer Messung eines physikalischen Parameters zu modifizieren, wobei die elektronische Schaltung (1) den kapazitiven Sensor (2) und eine elektronische Schnittstelle des Sensors umfasst, die einen Verstärkerblock (4) mit Ladungsübertragung, der mit einer beiden Kondensatoren des Sensors gemeinsamen beweglichen Elektrode verbunden ist, einen Integratorblock (5), der am Ausgang des Verstärkerblocks angeschlossen ist, um die von dem Verstärkerblock gelieferten Ladungen zu integrieren und um eine Messausgangsspannung (Vm) zu liefern, und einen Erregungsblock (3), der zwischen dem Ausgang des Integratorblocks und dem Sensor angeordnet ist, um jede feste Elektrode der Kondensatoren in einer normalen Betriebsart mit einer hohen Spannung (V_{DD}) oder mit einer niedrigen Spannung (V_{SS}) einer Konstantspannungsquelle in Bezug auf eine mittlere Ruhespannung des Sensors zwischen der hohen Spannung und der niedrigen Spannung entgegengesetzt vorzuspannen oder um jeden Kondensator durch die Ausgangsspannung des Integratorblocks zu ent-laden, umfasst,
wobei das automatische Testverfahren in einer normalen Betriebsart mehrere aufeinander folgende Messzyklen umfasst, die jeweils in wenigstens zwei aufeinander folgende Phasen unterteilt sind, die darin bestehen:
- in einer ersten Phase (P1) die zwei Kondensatoren (C1, C2, Cm) durch die von dem Integratorblock (5) gelieferte Ausgangsspannung (Vm) zu entladen und
- in einer zweiten Phase (P2) die feste Elektrode des ersten Kondensators (C1) durch die hohe Spannung oder die niedrige Spannung der Spannungsquelle vorzuspannen und die feste Elektrode des zweiten Kondensators (C2) durch die niedrige Spannung oder die hohe Spannung der Spannungsquelle entgegengesetzt vorzuspannen,
**dadurch gekennzeichnet, dass** das Verfahren in einer Testbetriebsart eine Testphase (TF) umfasst, in der eine zweite Vorspannungsphase (P2), die in wenigstens einem Zyklus von mehreren aufeinander folgenden Messzyklen auftritt, durch eine Phase zum Testen einer einzigen festen Elektrode eines Kondensators, die in jeder Testphase mit einer Vorspannung (V_{F}) vorgespannt wird, die größer als die niedrige Spannung (V_{SS}) und kleiner als die hohe Spannung (V_{DD}) ist, ersetzt wird, wobei diese Vorspannung auf der Grundlage einer konstanten Referenzspannung (Kₓ · V_{BG}) erhalten wird, die zu der mittleren Ruhespannung des Sensors (2) oder zu der Ausgangsspannung (Vm) des Integratorblocks hinzugefügt oder hiervon subtrahiert wird, wobei der Pegel dieser konstanten Referenzspannung als Funktion einer elektrostatischen Kraft programmiert oder eingestellt wird, die für den automatischen Test der elektronischen Schaltung absichtlich und unabhängig von jeder Schwankung der hohen Spannung oder der niedrigen Spannung erzeugt werden soll.

2. Automatisches Testverfahren nach Anspruch 1, **dadurch gekennzeichnet, dass** die konstante Referenzspannung (Kₓ · V_{BG}) auf der Grundlage einer Potentialsperrspannung (V_{BG}) einer Referenzschaltung erhalten wird, die in einem Multipliziererblock (31) mit einem bestimmten Faktor (Kₓ) von mehreren ge-speicherten Faktoren, die eine elektrostatische Kraft repräsentieren, die für die Verlagerung der beweglichen Elektrode in der Testphase (TF) absichtlich erzeugt werden soll, multipliziert wird.

3. Automatisches Testverfahren nach einem der vorherigen Ansprüche, **dadurch gekennzeichnet, dass** alle Phasen aufeinander folgender Messzyklen die gleiche Zeitdauer haben, dass eine Testphase (TF) abwechselnd mit einer zweiten Vorspannungsphase (P2) in einem von zwei aufeinander folgenden Zyklen auftritt und dass die konstante Referenzspannung zu der mittleren Spannung hinzugefügt oder hiervon subtrahiert wird, um die feste Elektrode eines Kondensators während der gesamten Dauer jeder Testphase vorzuspannen.

4. Automatisches Testverfahren nach einem der Ansprüche 1 und 2, **dadurch gekennzeichnet, dass** in jeder Testphase (TF) ein Impuls der konstanten Referenzspannung (Kₓ · V_{BG}) zu der mittleren Spannung hinzugefügt oder hiervon subtrahiert wird, wobei die Impulsbreite der konstanten Referenzspannung eine bestimmte Zeitdauer (Tₓ) ist, die kleiner ist als die Dauer jeder Testphase, wobei die bestimmte Zeitdauer entsprechend einer elektrostatischen Kraft, die erzeugt werden soll, eingestellt werden kann.

5. Automatisches Testverfahren nach einem der vorhergehenden Ansprüche, für das die elektronische Schaltung (1) zwei Integratorblöcke (5, 7), die jeweils mit dem Ausgang des Verstärkerblocks (4) verbunden sind, um abwechselnd und zyklisch Ladungen, die von dem Verstärkerblock geliefert werden, zu integrieren und um eine erste Messausgangsspannung (Vm_p) für den ersten Integratorblock (5) zu liefern und um eine zweite Messausgangsspannung (Vm_n) für den zweiten Integratorblock (7) zu liefern, und zwei Erregungsblöcke (3), wobei der erste Erregungsblock zwischen den Ausgang des ersten Integratorblocks und den Sensor (2) geschaltet ist und der zweite Erregungsblock zwischen den Ausgang des zweiten Integratorblocks und den Sensor geschaltet ist, umfasst, wobei der erste Erregungsblock die festen Elektroden der Kondensatoren mit der hohen Spannung für eine der festen Elektroden und mit der niedrigen Spannung für die andere feste Elektrode vorspannt oder jeden Kondensator mit der Ausgangsspannung des ersten Integratorblocks entlädt, während der zweite Erregungsblock jede feste Elektrode umgekehrt zu dem ersten Erregungsblock mit der niedrigen Spannung für eine der festen Elektroden und mit der hohen Spannung für die andere feste Elektrode vorspannt oder jeden Kondensator mit der Ausgangsspannung des zweiten Integratorblocks entlädt,
wobei das automatische Testverfahren in einer normalen Betriebsart mehrere aufeinander folgende Messzyklen umfasst, die jeweils in vier aufeinander folgende Phasen unterteilt sind, die darin bestehen:
- in einer ersten Phase (P1) den ersten Integratorblock (5) mit dem ersten Erregungsblock (3) in Betrieb zu nehmen und den zweiten Integratorblock (7) mit dem zweiten Erregungsblock (6) in Ruhe zu versetzen, um die zwei Kondensatoren (C1, C2) mit der Ausgangsspannung (Vm_p), die von dem ersten Integratorblock (5) geliefert wird, zu entladen,
- in einer zweiten Phase (P2), in der der erste Integratorblock und der erste Erregungsblock in Betrieb sind, die feste Elektrode des ersten Kondensators (C1) mit einer hohen Spannung (V_{DD}) vorzuspannen und die feste Elektrode des zweiten Kondensators (C2) mit einer niedrigen Spannung (V_{SS}) vorzuspannen,
- in einer dritten Phase (P3) den zweiten Integratorblock (7) mit dem zweiten Erregungsblock (6) in Betrieb zu nehmen und den ersten Integratorblock (5) und den ersten Erregungsblock (3) in den Ruhezustand zu versetzen, um die zwei Kondensatoren (C1, C2) mit der Ausgangsspannung (Vm_n), die von dem zweiten Integtratorblock (7) geliefert wird, zu entladen, und
- in einer vierten Phase (P4), in der der zweite Integratorblock und der zweite Erregungsblock arbeiten, die feste Elektrode des ersten Kondensators (C1) mit einer niedrigen Spannung (V_{SS}) vorzuspannen und die feste Elektrode des zweiten Kondensators (C2) mit einer hohen Spannung (V_{DD}) vorzuspannen,
**dadurch gekennzeichnet, dass** in einer Testbetriebsart das Verfahren eine Testphase (TF) umfasst, die eine zweite Vorspannungsphase (P2) ersetzt, die in wenigstens einem von zwei aufeinander folgenden Messzyklen auftritt, in der eine einzige feste Elektrode eines Kondensators in jeder Testphase mit der Vorspannung (V_{F}) vorgespannt wird, die durch die konstante Referenzspannung (Kₓ · V_{BG}) erhalten wird, die auf die gewünschte elektrostatische Kraft eingestellt ist.

6. Elektronische Schaltung (1) mit kapazitivem Sensor (2), die für die Ausführung des automatischen Testverfahrens nach einem der vorhergehenden Ansprüche geeignet ist, wobei die elektronische Schaltung (1) den kapazitiven Sensor (2), der zwei Kondensatoren (C1, C2) in differentieller Schaltung enthält, wovon sich eine gemeinsame Elektrode (Cm) in Bezug auf jede feste Elektrode der zwei Kondensatoren verlagern kann, um den Kapazitätswert jedes Kondensators bei einer Messung eines physikalischen Parameters zu modifizieren, und eine elektronische Schnittstelle des Sensors umfasst, die einen Verstärkerblock (4) mit Ladungsübertragung, der mit einer den Kondensatoren des Sensors gemeinsamen beweglichen Elektrode verbunden ist, einen Integratorblock (5), der mit dem Ausgang des Verstärkerblocks verbunden ist, um die von dem Verstärkerblock gelieferten Ladungen zu integrieren und um eine Messausgangsspannung (Vm) zu liefern, und einen Erregungsblock (3), der zwischen den Ausgang des Integratorblocks und den Sensor geschaltet ist, um in einer normalen Betriebsart jede feste Elektrode der Kondensatoren mit einer hohen Spannung (V_{DD}) oder mit einer niedrigen Spannung (V_{SS}) einer Konstantspannungsquelle in Bezug auf eine mittlere Ruhespannung des Sensors zwischen der hohen Spannung und der niedrigen Spannung entgegengesetzt vorzuspannen, oder um jeden Kondensator mit der Ausgangsspannung des Integratorblocks zu entladen, umfasst, **dadurch gekennzeichnet, dass** sie einen Multipliziererblock (31) umfasst, um eine Potentialsperrspannung (V_{BG}) einer Referenzschaltung mit einem bestimmten Faktor (Kₓ) von mehreren gespeicherten Faktoren zu multiplizieren, der eine absichtlich zu erzeugende elektrostatische Kraft repräsentiert, um eine konstante Referenzspannung (Kₓ · V_{BG}) zu erzeugen, die zu der mittleren Spannung hinzugefügt oder hiervon subtrahiert werden soll, um eine Einzige der festen Elektroden in jeder Testphase (TF) der elektronischen Schaltung vorzuspannen.

7. Elektronische Schaltung (1) nach Anspruch 6, **dadurch gekennzeichnet, dass** sie einen Unterbrecher (32) umfasst, der zwischen den Ausgang des Multipliziererblocks (31) und eine der festen Elektroden der Kondensatoren, die in jeder Testphase (TF) vorgespannt werden sollen, geschaltet ist, wobei der Unterbrecher, der durch Taktsignale gesteuert wird, in jeder Testphase geschlossen wird, und dass jeder Multipliziererblock (31) durch ein Auswahlsignal (Sₓ) ge-steuert wird, um einen konstanten Referenzspannungsimpuls zu erzeugen, der zu der mittleren Ruhespannung hinzugefügt oder hiervon subtrahiert wird und eine bestimmte Zeitdauer (Tₓ) hat, die kleiner ist als die Dauer jeder Testphase, um die elektrostatische Kraft einzustellen, die in jeder Testphase erzeugt werden soll.

8. Elektronische Schaltung (1) nach einem der Ansprüche 6 und 7, **dadurch gekennzeichnet, dass** sie zwei Integratorblöcke (5, 7), die jeweils mit dem Ausgang des Verstärkerblocks (4) verbunden sind, um abwechselnd und zyklisch Ladungen zu integrieren, die von dem Verstärkerblock geliefert werden und um eine erste Messausgangsspannung (Vm_p) für den ersten Integratorblock (5) und eine zweite Messausgangsspannung (Vm_n) für den zweiten Integratorblock (7) zu liefern, und zwei Erregungsblöcke (3), wovon der erste Erregungsblock zwischen den Ausgang des ersten Integratorblocks und den Sensor (2) geschaltet ist und der zweite Erregungsblock zwischen den Ausgang des zweiten Integratorblocks und den Sensor geschaltet ist, umfasst, wobei der erste Erregungsblock die festen Elektroden der Kondensatoren mit der hohen Spannung für eine der festen Elektroden und mit der niedrigen Spannung für die andere feste Elektrode vorspannt oder jeden Kondensator mit der Ausgangsspannung des ersten Integratorblocks entlädt, während der zweite Erregungsblock jede feste Elektrode ent-gegengesetzt zu dem ersten Erregungsblock mit der niedrigen Spannung für eine der festen Elektroden und mit der hohen Spannung für die andere feste Elektrode vorspannt oder jeden Kondensator mit der Ausgangsspannung des zweiten Integratorblocks entlädt.
